# EUROPEAN PATENT APPLICATION

(11) **EP 0 682 096 A2**
(43) Date of publication of application: **15.11.1995**
(21) Application number: 95103716.7
(22) Date of filing: 15.03.1995
(51) Int. Cl.: C09D 167/00

(54) **Paints with adhesive properties for the multilayer coating of sheet metal, and their use**

(30) Priority: 12.05.1994 IT MI940946
(71) Applicant: SIQUAM S.P.A., I-20090 Caleppio di Settala Mi (IT)
(72) Inventor: Beranger, Mario, I-20075 Lodi (LO) (IT)
(74) Representative: Klausner, Erich

(57) **Abstract**

Paints with adhesive properties that are particularly useful for the multilayer coating, paint plus plastic film material, of sheet metal in coil or plate form, are described, as well as their use for the multilayer coating, paint plus plastic film material or plastic film plus paint.

The paints with adhesive properties of the present invention accomplish two distincts tasks: (i) providing the basic characteristics and colour; (ii) allowing the plastic film material to be permanently anchored.

## Description

The present invention relates to paints with adhesive properties that are particularly suited for coating sheet metal strips in coil or plate form, viz. for the coil or sheet coating process, the thus obtained paints and their use methods.

It is well known in the art that coil coating is one of the most up-to-date and technologically advanced methods for the continuous production of precoated metal laminates.

Various coil coating processes have been known and used for a long time. For example, in the case of painting as such, a roll of sheet metal is unrolled as it is fed to a painting line. After having been subjected to the appropriate pretreatment operations, the sheet metal is caused to pass through the painting station where a first paint coat is applied onto one side or both sides of the strip. The painting operation consists of applying, usually by roll coating, doctor blade coating, curtain coating or sometimes (especially in the case of powder paint) spray coating, a thermosetting or thermoplastic painting composition, in either liquid or powder form. Usually, this first layer acts as an anchoring layer or primer. The thus treated sheet is fed to an oven wherein the resin is cured, whereupon, at the exit from the oven, the strip is first air cooled, then water cooled. Thereafter, said cooled strip is made to pass through a second painting station for the application of the finish coat, followed by the entry into a second oven for curing the second paint layer and at the exit it is cooled as above. After entering the exit accumulator, the painted strip is checked and rewound.

According to another coil coating method, instead of using a painting process as briefly described above, the metal laminates can be coated with coloured plastic material films durably bonded to the metal support by means of a suitable adhesive. This durable bonding is obtained through the combined action of heat and lamination pressure.

Also this process starts with a roll of sheet metal that is unrolled and subjected to the appropriate pretreatment operation, followed by the application of an adhesive layer, whereafter the sheet metal with the adhesive coating is fed into an oven and baked at a temperature (P.M.T.) of from 160°C to 220°C; at the exit from the oven it is continuously adhesively coupled with the plastic film, followed by lamination by means of a pressing calender.

According to the type of sheet metal (e.g. a plate of cold-rolled or zinc-plated steel or aluminium), a primer is applied in order to obtain a greater corrosion resistance or an improved adhesive anchorage, which primer is also oven-dried before an adhesive is applied thereto.

In the coil coating field, the measured temperature, owing to the short oven dwelling times of the material under treatment (normally 10-60 seconds), is not the inner space temperature of the oven, but the one (peak metal temperature : P.M.T.) which is detected by means of optical pyrometres in the terminal zones of the oven, so as to ensure that said material reaches the required temperature values.

The coloured films generally used for this purpose are based on polyvinyl fluoride (PVF), vinyl materials, especially polyvinyl chloride (PVC), and acrylic materials (thermoplastics). The PVC-based films are the most frequently used ones because they are available in a wide range of formulations, colours and surface appearance for selecting the most suited ones for the end use.

Known, furthermore, is also a process for the two-step application of a "mixed" multilayer (paint plus clear plastic film). In the first step, one or more paint layers are applied according to one of the above described methods. The thus coated metal strip, after oven curing and subsequent cooling, is fed to a further painting station wherein a suitable adhesive is applied, onto which, after passing through an oven, a clear film is pressure-applied.

The coatings obtained by means of one of the first described painting processes usually exhibit good mechanical, durability and chemical resistance characteristics. However they are not very suitable when a high flexibility coupled to a high hardness degree is required. Moreover, the staining resistance is not very satisfactory and the final gloss does not usually reach values higher than 90-92 gloss, as determined at 60°, according to the A.I.C.C. method No. 7 (A.I.C.C. = Associazione Italiana Coil Coating - Italian Coil Coating Association). This method is equivalent to the A.S.T.M. D523 and the ECCA T2 methods.

On the other hand, the coatings of the second type, the so-called laminated film coatings, have aesthetical and hardness limitations; moreover, the coatings based on PVC film might in the near future be banned for environmental and recyclability reasons.

Finally, the last described mixed process allows precoated metal laminates to be obtained that are markedly better than those obtainable with the other two processes, but said process has the draw-back of being considerably more expensive since it involves a dual processing step (i.e. the application firstly of the paint and secondly of the adhesive).

There was therefore the need to devise a process for manufacturing precoated multilayer metal laminates whereby to obtain a product having in all the same as or better characteristics than those that can be obtained with the above-mentioned two-step mixed process, at a decidedly lower cost; such a process has been realized by the applicant and is the object of a patent application, filed on even date, with application number MI94A000945, titled "A process for multylayer coating sheet metal strips in coil or plate form, and thus obtained product."

One of the main features of that process is the use of a special pigmented or clear paint with adhesive properties.

The object of the present invention is therefore to provide paints having adhesive properties, which can be pigmented or clear, useful for the multilayer coating of sheet metal in coil or plate form.

Through the use of the paints of the present invention it has become possible to obtain in a single step a multilayer coating comprising a possibly pigmented paint and a clear coating film. Therefore, the pigmented paint accomplishes two distinctly different tasks:
(a) imparting the basic characteristics and colour (typical functions of a conventional paint);
(b) acting as a durable anchoring agent for the top coat.

The multilayer coatings obtained with the process of the present invention exhibit excellent characteristics, in particular:
(a) a very appealing aesthetic appearance such as image depth and a specular surface;
(b) a very high gloss, usually higher than 100, as measured according to the the method A.I.C.C. No. 7 (equivalent to A.S.T.M. D523 and ECCA T2);
(c) an extremely hard top surface, of greater hardness than 2H, as measured according to the method A.I.C.C. No. 11 (equivalent to A.S.T.M. D3363 and ECCA T4).
(d) a stain-proof surface, suited also for contact with food-stuff;
(e) an excellent cleansing facility; stains of any kind (even paint) can be removed by solvent cleaning (alcohols or ketones) leaving no trace or mark on the coated film. The inventive laminates can therefore be used as anti-graffiti surfaces;
(f) a total absence of microcrackings when the metal support is subjected to very severe bending or deformation;
(g) a very high resistance to chemicals, be it for the intrinsic nature of the system, be it for the absence of microcrackings after processing;
(h) a very good weatherability in case special films are used or the reverse layer cycle is applied.

The use of the paints with adhesive properties of the present invention has shown to be very advantageous also as far as the multilayer coating application method is concerned. In fact, the coating can be applied by the coil coating, sheet coating, powder prepainting method or by any other method wherein, once the paint has been applied and subsequently baked at the activation temperature of said paint, a film can be directly applied thereonto by means of calendering. According to a preferred method, after carrying out the usual pretreatment operations on the metal surface to be coated a primer is applied onto the metal strip on a conventional coil coating line having two application stations and two drying ovens, said primer being dried in a first oven, followed by the application of the adhesive paint, which is activated in the second oven, and finally a clear coating film is calendered thereonto.

According to another preferred method of using the adhesive paints of the present invention, the adhesive paints can be applied directly onto the metal strip, without any primer, whereupon it is activated by heating in an oven, and a clear coating film is applied onto the so activated paint, said application being carried out by calendering, which film is thereafter coated with a pigmented paint layer and dried in a second oven. It is to be understood that in this case to the paint with adhesive properties that is used for anchoring the clear film corrosion-proofing pigments will suitably have been previously added (see Example 4).

The pigmented paint used as a finish on the plastic film can be any paint conventionally used for coil-coating with good anchoring properties onto the film and excellent outdoor durability characteristics.

By using the paints with adhesive properties according to the present invention, any clear film of the type conventionally used for preparing metal laminates can be employed; however, polyester films such as polyethylene terephthalate (PET) or polyethylene naphthenate, acrylic films, polyvinyl fluoride (PVF) and polyamide films would be preferred.

The paints with adhesive properties according to the invention contain a binder consisting of an oil-free polyester resin, a melamine resin and/or a blocked isocyanate having hydroxyl functional groups that can at least in part react with the isocyanate groups of the polyisocyanate or with the melamine resin. Besides consisting of polyester resin, the binder with hydroxyl functional groups can also consist of other resins, such as, e.g., polyols, polyethers, polyacrylates, polyglycols, and of other film-forming polymers having hydroxyl groups.

Preferably, the binder with hydroxyl functional groups consists of a high molecular weight saturated polyester combined with minor amounts of melamine resins and/or blocked isocyanates. Preferred among the above-mentioned polyesters are linear saturated polyesters with a molecular weight of from 10,000 to 25,000 having a glass transition temperature (Tg) of from 40°C to 70°C and a hydroxyl number (OHN) of from 5 to 10, expressed as mg/KOH, such as Polyester T14 which can be obtained from Hüls AG, Paul Baumann Str. 1 45764 Marl (Germany).

The blocked polyisocyanates useful for the paints with adhesive properties, suitable for the inventive process, can be aliphatic, cycloaliphatic, and also aromatic. Yet aliphatic and cycloaliphatic polyisocyanates are particularly suitable.

Blocked isocyanate that can be readily found on the market have currently a cycloaliphatic or aliphatic nature, such as VESTANAT B 1481, VESTANAT B 1370, VESTANAT B 1358 A from HÜLS AG, Marl (Germany) and DESMODUR BL 3175 available from BAYER AG, Leverkusen (Germany).

The term polyisocyanate as used for the above-mentioned products refers to resins with triisocyanurate structure, based on isoforone diisocyanate (IPDI) and hexamethylenediisocyanate (HDI). The blocking agents are preferably oximes or caprolactam.

As an alternative to the blocked isocyanate, or in combination therewith, hexamethoxymethyl melamine resins can for example be employed. A presently preferred resin of this type is CYMEL 303 available from DYNO CYTEC, Rotterdam (The Netherlands).

Useful solvents for preparing the adhesive paint are those commonly used in this field and are selected, e.g., from the class of aromatic hydrocarbons, esters, ethers and ketones. The solvents should obviously be capable of dissolving all the organic components of the paint. Especially preferred solvents are the ones selected from the class of high-boiling aromatic hydrocarbons, esters and glycols.

Besides the above-mentioned ingredients, the adhesive paint can contain inorganic or organic pigments, pigmenting dyestuffs and any of the processing aids and/or additives commonly used in the art of coil coating paints.

Obviously, the paint can also not contain any pigment or dyestuff at all when a clear coating is desired in order to highlight the underlying metal.

The present invention will now be better illustrated by means of some working examples. The parts, unless otherwise stated, mean parts by weight.

### Example 1

A 45% solution of polyester resin (Polyester T14) in a mixed solvent SOLVESSO 150: ethoxypropyl acetate (1:1). Thereafter, 30 parts of said polyester solution are pre-dispersed in a high speed dispersion mill (Cowless) under addition of 2 parts of milling-aid and wetting agents. Under continuous stirring 30 parts of a pigment based on titanium dioxide (rutile) are added in small portions.

After achieving a good dispersion, the mixture is refined in a pearl mill until the desired refining degree is obtained.

Under continuous stirring, the rest of the polyester solution (22 parts) and 3 parts of hexamethoxymethyl melamine (Cymel 303) and 4.5 parts of ethoxypropyl acetate, 0.5 of a catalyst, 4 parts of blocked isocyanate and the remaining 2 parts of additives are added.

The viscosity is then adjusted by means of about 2 parts of SOLVESSO 150, followed by the addition of suitable colouring pastes based on the same formulation as the paints of the present invention to give the desired colour hue.

The described paint has the following percent composition:

| | |
|---|---|
| - polyester resin (45% solution) | 52.0 |
| - titanium dioxide | 30.0 |
| - blocked isocyanate (60% solution) | 5.0 |
| - melamine resin | 3.0 |
| - additives | 4.0 |
| - catalyst | 0.5 |
| - SOLVESSO 150 (solvent) | 2.0 |
| - ethoxypropyl acetate (solvent) | 3.5 |

### Example 2

Using the same procedures as described in Example 1, a paint with adhesive properties is prepared having the following percent composition:

| | |
|---|---|
| - polyester resin (45% solution) | 52.0 |
| - titanium dioxide | 30.0 |
| - blocked isocyanate (60% solution) | 6.2 |
| - additives | 4.0 |
| - catalyst | 0.5 |
| - ethoxypropyl acetate (solvent) | 3.3 |
| - SOLVESSO 150 (solvent) | 4.0 |

### Example 3

Using the same procedures as described in Example 1, a paint with adhesive properties is prepared having the following percent composition:

| | |
|---|---|
| - polyester resin (45% solution) | 50.0 |
| - titanium dioxide | 30.0 |
| - melamine resin | 7.0 |
| - additives | 4.0 |
| - catalyst | 0.2 |
| - ethoxypropyl acetate (solvent) | 4.5 |
| - SOLVESSO 150 (solvent) | 4.3 |

### Example 4

Using the same procedures as described in Example 1, a paint with adhesive and corrosion resistance properties is prepared having the following percent composition:

| | |
|---|---|
| - polyester resin (45% solution) | 60.0 |
| - titanium dioxide | 12.0 |
| - strontium chromate | 6.0 |
| - talc | 2.0 |
| - blocked isocyanate (60% solution) | 5.5 |
| - melamine resin | 3.5 |
| - catalyst | 0.6 |
| - additives | 4.0 |
| - ethoxypropyl acetate (solvent) | 3.5 |
| - SOLVESSO 150 (solvent) | 2.9 |

Alternatively, T14 polyester resin can be substituted with TCP2 polyester resin available from Hüls AG, up to 30% maximum, dry basis.

Hereinafter the main characteristics of prior art coatings are synoptically compared with those of the multilayer coatings as obtained with the paints with adhesive properties of the present invention.

| | Prior Art coating | Multilayer coatings of the invention |
|---|---|---|
| Layer thickness | 20-50 µm | 30-100 µm |
| Gloss A.I.C.C. No. 7 (A.S.T.M. D523; ECCA T2) | 92 gloss max | >100 gloss |
| Pencil hardness A.I.C.C. No. 11 (A.S.T.M. D3363; ECCA T4) | F-H | 2-3 H |
| T-bend test A.I.C.C. No. 12 (ECCA T7) | 1-3 T | O T |
| Solvent resistance: 5 min. immersion in MEK | poor | the layer remains unaltered |
| Staining resistance | poor | very good |
| Graffiti cleansability | very difficult or impossible | very easy |
| Detergent resistance | good | very good |
| 20% sheet elongation | 60% gloss loss | 15-20% gloss loss |

## Claims

1. A cross-linkable paint with adhesive properties, in liquid or powder form, characterized in that it cointains:
(i) an oil-free saturated polyester resin with a molecular weight of from 10,000 to 25,000, having a Tg of from 40 to 70°C, and a hydroxyl number of from 5 to 10 mg/KOH;
(ii) one or more cross-linking agents;
(iii) a cross-linkying catalyst and, possibly:
(iv) one or more colouring pigments,
(v) additives
said paint beeing further characterized in that, after being applied onto sheet metal and oven-activated at a temperature (P.M.T.) of from 200 to 230°C it allows a colourless coating film to be permanently bonded, thus producing a metal laminate having a pencil hardness of equal or greater than 2H, as measured according to A.I.C.C. method No. 11 and a bending resistance with no crackings of OT, as measured according to the A.I.C.C. method No. 12.

2. A paint with adhesive properties according to claim 1, characterized in that it has the following percent composition:
| | |
|---|---|
| - polyester resin (45% solution) | 45-55 |
| - pigments (white and/or pastel-coloured) | 20-35 |
| - cross-linking agent: blocked polyisocianate (60-75% solution) | 3-5 |
| - cross-linking agent: melamine resin | 2-4 |
| - catalyst | 0.2-0.8 |
| - additives | 2-5 |
| - solvents q.s. ad 100 | |

3. A paint with adhesive properties according to claim 1, characterized in that it has the following percent composition:
| | |
|---|---|
| - polyester resin (45% solution) | 55-72 |
| - pigments (dark) | 3-25 |
| - cross-linking agent: blocked polyisocianate (60-75% solution) | 3-7 |
| - cross-linking agent: melamine resin | 2-8 |
| - catalyst | 0.2-1.0 |
| - additives | 2-5 |
| - solvents q.s. ad 100 | |

4. A paint with adhesive properties according to claim 1, characterized in that it has the following percent composition:
| | |
|---|---|
| - polyester resin (45% solution) | 50-70 |
| - pigment, titanium dioxide | 8-16 |
| - pigment, strontium chromate | 3-8 |
| - talc | 0-4 |
| - cross-linking agent: blocked polyisocianate (60-75% solution) | 0-10 |
| - cross-linking agent: melamine resin | 0-10 |
| - catalyst | 0.2-1.0 |
| - additives | 2-5 |
| - solvents q.s. ad 100 | |

5. A paint with adhesive properties according to claim 2, characterized in that it contains no pigments.

6. Use of a paint with adhesive properties according to any of claims 1 to 5 for manufacturing multilayer metal laminates.
